# EUROPÄISCHE PATENTSCHRIFT

(11) **EP 1 489 371 B1**
(45) Veröffentlichungstag und Bekanntmachung des Hinweises auf die Patenterteilung: **26.12.2012**
(21) Anmeldenummer: 04019766.7
(22) Anmeldetag: 26.03.2003
(51) Int. Cl.: F26B 17/20, A23N 17/00

(54) **Konditionierer**
Conditioner
Conditionneur

(30) Priorität: 26.03.2002 DE 10213737; 08.07.2002 DE 10230817
(43) Veröffentlichungstag der Anmeldung: 22.12.2004
(62) Teilanmeldung aus: 03744753.9
(73) Patentinhaber: Bühler AG, 9240 Uzwil (CH)
(72) Erfinder: Hermsmeyer, Andrea, 9244 Niederuzwil (CH); Hanimann, Philipp, 9000 St. Gallen (CH)
(74) Vertreter: Hepp Wenger Ryffel AG

(56) Entgegenhaltungen:
- EP-A- 0 610 789
- GB-A- 1 106 445
- US-A- 1 449 280
- US-A- 1 690 753
- US-A- 1 793 638
- US-A- 4 659 299

## Beschreibung

Die Erfindung betrifft einen Konditionierer, insbesondere zur Herstellung konditionierter Futter- oder Lebensmittel.

Konditionierer werden einzeln als Prozessoren oder in Verbindung mit Press- bzw. Expanderanlagen bei der Aufbereitung von Futtermitteln oder Lebensmitteln verwendet. Allgemein handelt es sich um Mischaggregate, in denen ein zu behandelndes Produkt über eine gewisse Verweildauer thermisch oder hydrothermisch behandelt wird. Diese Behandlung dient zur Hygienisierung der Produkte, der Verbesserung des Nährwertes und/oder der Produktstruktur.

Derartige Mischaggregate sind zum Beispiel aus den EP-B-231764 und EP-B-610789 bekannt. Hierbei ist einem solchen Mischer modulartig eine Dosiereinrichtung vorgeschaltet und aus dem Mischer wiederum wird eine Pressform oder ein Expander gespeist. Das Mischaggregat ist mit einem Heizmantel versehen und enthält eine rotierende Welle, die mit Misch- und Förderelementen bestückt ist.

Derartige Aggregate sind dabei entweder auf den Einsatz in Press- oder Expanderanlagen zugeschnitten oder nur solitär verwendbar, da der Anpassungsaufwand hoch ist.

Gemäss der EP-B-610789 ist zur Erwärmung der produktführenden Teile und Aggregate ein Luftkreislauf mit einem Ventilator, einer Verbindungsleitung, einem Lufterhitzer, einem seitlich am Produktausgangskanal angeordneten unteren Luftanschluss mit einem Lufteintrittskanal, einem Lufteintrittskanal mit einem seitlich am Produktzufuhrkanal angeordneten oberen Luftanschluss vorgesehen, wobei die Luftführung vom Produktausgangskanal über die Pressform, den Produktzufuhrkanal, das Speise- und Mischaggregat zum Produkteinlaufkanal erfolgt.

Bekannt sind auch Lösungen zur Energierückgewinnung bei Prozessoren, in denen zum Beispiel die Abwärme einer Expanderanlage genutzt wird.

Das Dokument GB 1 106 445 A offenbart einen Konditionierer mit allen Merkmalen des Oberbegiffs des Anspruchs 1.

Der Erfindung liegt die Aufgabe zugrunde, einen Konditionierer zu schaffen, der mit geringem Aufwand für unterschiedliche Einsatzbereiche anpassbar ist und mit einfachen Mitteln eine zuverlässige Hygienisierung ermöglicht. Diese Aufgabe ist mit den Merkmalen des Anspruchs 1 gelöst.

Der Konditionierer ist strikt modular aufgebaut, so dass Kapazitätsanpassungen oder dergleichen ausschliesslich durch Veränderung der Zahl der Einzelaggregate und/oder deren Längen- und/oder Durchmesservariation erfolgen. Bevorzugt umfasst ein Konditionierer einen Dosierer, mindestens einen Mischer und auch mindestens einen Verweiler. Sämtliche Aggregate sind nach der Lösung von Stirnplatten austauschbar und bevorzugt vollständig mit Wärmeisolationen bzw. Heizelementen versehen.

Über die Stirnplatten auf beiden Seiten von Mischer und Verweiler können Antriebe, Rotoren und Arbeitselemente unkompliziert gewechselt werden. Möglich sind auch Ausführungen ohne Verweiler oder die nur einen Verweiler umfassen und/oder die nur mit einem Mischer oder Dosierer kombiniert sind.

Der Konditionierer ist bevorzugt für einen kontinuierlichen Betrieb ausgelegt.

Das Aufheizen erfolgt bevorzugt im Rundlauf unter Einschluss von Presse oder Expander. Die Presse ist mit einem Bypass versehen, um auch den Übergangsbereich zu einem nachgeordneten Kühler mit zu erhitzen, um grösstmögliche Salmonellenfreiheit etc. zu erreichen.

Sowohl Mischer wie Verweiler können Dampf bzw. Heissluft zugeführt werden zum Aufheizen und/oder Hygienisieren von Produkt. Heissluft kann auch an Dosierer und Verweiler im Betriebsmodus vorbeigeführt werden, falls das zu konditionierende Produkt sonst geschmacklich und/oder strukturell beeinträchtigt wird.

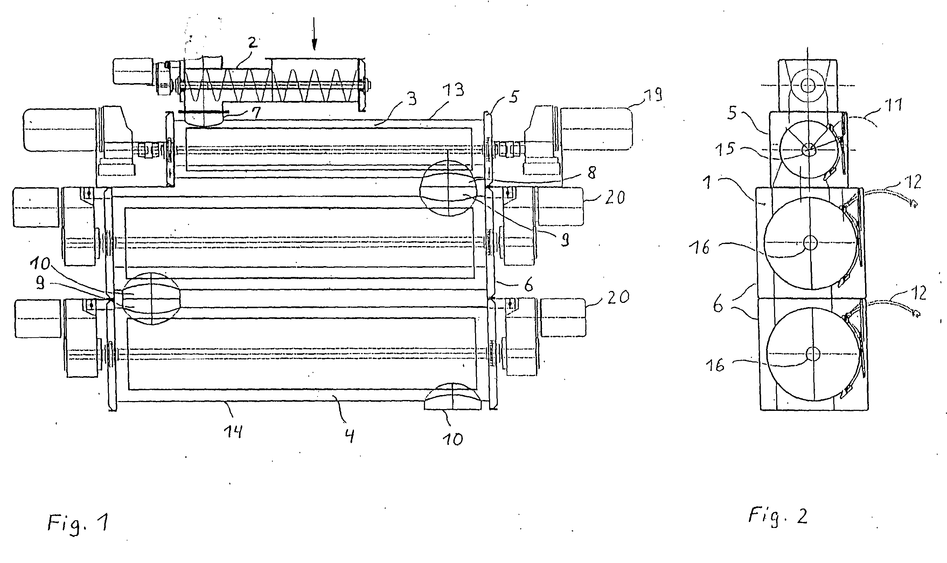

Die Erfindung wird nachfolgend in einem Ausführungsbeispiel an Hand einer Zeichnung näher beschrieben. In der Zeichnung zeigen die
- Fig. 1:: einen vollständigen Konditionierer in einer Prinzipdarstellung,
- Fig. 2:: den Konditionierer aus Figur 1 im Schnitt,

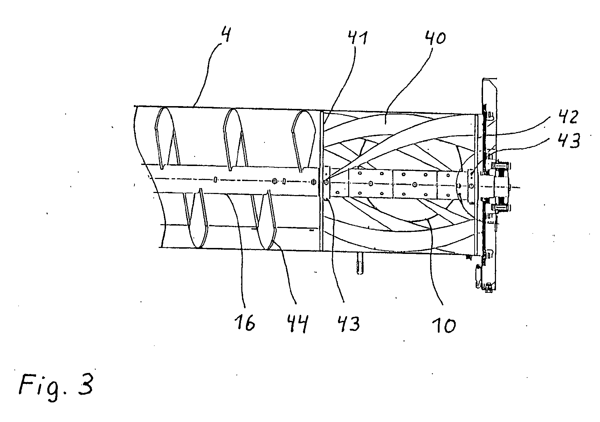

- Fig. 3:: einen Verweiler (Ausschnitt).

Ein Konditionierer 1 beinhaltet einen Dosierer 2 (Schneckendosierer), einen Mischer 3 und im konkreten Fall zwei Verweiler 4, die übereinander angeordnet sind und ein Konditioniermodul bilden. Der Mischer 3 und die Verweiler 4 weisen jeweils gleichartige Stirnplatten 5 bzw. 6 auf, über die auch die Modulanordnung erfolgt.

Die Produktführung erfolgt über die entsprechenden Produktzuführöffnungen 7, 9 bzw. Produktabführöffnungen 8, 10. Über die Produktabführöffnung 10 des unteren Verweilers 4 erfolgt die Übergabe des Produkts in eine Würfelpresse. Der Dosierer 2 ist an der Produktzuführöffnung 7 des Mischers 3 angeflanscht.

Der Mischer 3 weist einen schnelllaufenden Rotor zur intensiven Produktdurchmischung mit Dampf, Gasen und/oder Flüssigkeiten auf. Der Verweiler 4 ist hingegen mit einem langsam laufenden Rotor versehen. Im Verweiler 4 wird das erhitzte, gemischte Produkt über eine vorbestimmte Zeit auf einer definierten Temperatur gehalten.

Mischer 3 und Verweiler 4 weisen dicht verschliessbare Öffnungen 11 bzw. 12 im jeweiligen Mantel 13 bzw. 14 auf. Die Mäntel 13 bzw. 14 sind rohrförmig und wie auch die Öffnungen 11, 12 und Stirnplatten 5, 6 vollständig mit Heizmatten und Isolationsmitteln belegt. Bevorzugt sind die Innenseiten der Mäntel 13, 14, einschliesslich der Produktübergabeöffnungen (Bezugszeichen 7 bis 10) vollkommen glatt.

Mischer 3 und Verweiler 4 enthalten Rotoren 15 bzw. 16 mit Arbeitselementen. Diese können schneckenförmig oder paddelförmig ausgebildet sein. Paddel sind überdeckend ausgebildet, was ein Anbacken von Produkt an der Gehäuseinnenwand von Mischer 3 oder Verteiler 4 unterbindet. Aussen sind an den Rotoren 15, 16 Antriebseinheiten 19, 20 angeflanscht. Die Rotoren 15, 16 bestehen aus gleichartigen Segmenten, so dass ein leichter Austausch gegeben ist und nur wenig Platz für Ausbau und Wechsel benötigt wird. Die Rotorwellen sind bevorzugt als Hohlwellen ausgebildet.

Für einen Wechsel eines Rotors 15, 16 o. a. genügt es, die Antriebseinheit 19 bzw. 20 resp. eine Stirnplatte 5, 6 zu entfernen und den Rotor nach lösen der gegenüber liegenden Lagerung herauszuziehen. Die Antriebe 19, 20 können wahlweise rechts oder links angeordnet sein.

Sämtliche Bauteile sind bevorzugt kompatibel und kombinierbar.

Der/die Verweiler 4 weist gegenüber dem Mischer 3 und dem Dosierer 2 geringere Drehzahlen des Rotors auf, so dass für einen kontinuierlichen Betrieb das Fassungsvermögen der Einzelaggregate abzustimmen ist.

Der Rotor 16 des Verweilers 4 ist im Bereich der Produktabführöffnung mit schraubenförmig verdrehten, bandförmigen Misch- und Förderelementen (Leitblech 40) ausgerüstet, die einen kontinuierlichen und hohen, gleichmässigen Produktfluss zur Würfelpresse 30 ermöglichen. Insbesondere soll durch eine leichte Überhebung des Produkts dessen Bewegung verzerrt und ein pulsieren desselben gedämpft werden.

Die Leitbleche 40 sind zwischen Rädern 41, 42 angeordnet und bilden mit diesen bevorzugt eine Baugruppe. Die Räder 41, 42 weisen nicht dargestellte Speichen auf, die einen ungehinderten Produktfluss ermöglichen. Die Räder 41, 42 sind mittels üblicher Buchsen 43 auf dem Rotor 16 des Verweilers 4 angeordnet.

Die Ausführung der Leitbleche 40 und deren Anzahl kann mit der Kapazität bzw. Bauform des Konditionierers 1 variieren. Minimal sind 4 Leitbleche vorgesehen, möglich sind auch bis ca. 16 derartige Leitbleche 40.

Bedarfsweise können auf der Rotorwelle noch zusätzliche Paddel vorgesehen sein.

Die Pellets werden nach verlassen der Würfelpresse in üblicher Weise in einem Kühlergekühlt und anschliessend in üblicher Weise weiteren Stationen zugeführt.

### Bezugszeichen

- 1.: Konditionierer
- 2.: Dosierer
- 3.: Mischer
- 4.: Verweiler
- 5.: Stirnplatte
- 6.: Stirnplatte
- 7.: Produktzuführöffnung
- 8.: Produktabführöffnung
- 9.: Produktzuführöffnung
- 10.: Produktabführöffnung
- 11.: Öffnung
- 12.: Öffnung
- 13.: Mantel
- 14.: Mantel
- 15.: Rotor
- 16.: Rotor
- 19.: Antriebseinheit
- 20.: Antriebseinheit
- 41: Rad
- 42: Rad
- 43: Buchse
- 44: Paddel

## Patentansprüche

1. Konditionierer (1) mit mindestens einem Aggregat (4) zum Mischen von Produkten, wobei das Aggregat (4) einen Mantel (14) aufweist, in dem ein drehbarer Rotor (16) mit Arbeitselementen (44) angeordnet ist, wobei die Arbeitselemente (44) schneckenförmig oder paddelförmig ausgebildet sind und wobei das Aggregat ein Verweiler (4) mit einem Rotor (16) ist und der Verweiler (4) im Bereich einer Produktabführöffnung (10) mit Misch- und Förderelementen (40) versehen ist, **dadurch gekennzeichnet, dass** die Misch- und Förderelemente bandförmige Leitbleche (40) sind, die zwischen radförmigen Elementen (41, 42) angeordnet und über diese mit dem Rotor (16) des Verweilers (4) verbunden sind.

2. Konditionierer nach Anspruch 1, **dadurch gekennzeichnet, dass** die Misch- und Förderelemente (40) schraubenförmig verdreht angeordneten sind.

3. Konditionierer nach Anspruch 2, **dadurch gekennzeichnet, dass** 4 bis 16 Leitbleche (40), bevorzugt 12 Leitbleche (40) angeordnet sind.

4. Konditionierer nach Anspruch 1, **dadurch gekennzeichnet, dass** ein Mischer (3) dem Verweiler (4) vorgeschaltet ist und Mischer (3) und Verweiler (4) an beiden Stirnseiten durch Stirnplatten (5, 6) verschlossen sind.

5. Konditionierer nach Anspruch 4, dadurch gekenntzeichnet, dass die Aggregate (3, 4) mindestens an den Stirnplatten (5, 6) einer Stirnseite so verbindbar sind, dass eine Modulanordnung gegeben ist.

6. Konditionierer nach einem der Ansprüche 4 oder 5, **dadurch gekennzeichnet, dass** die Rotoren (15, 16) von Mischer (3) und Verweiler (4) aus je mindestens einem Segment bestehen und bevorzugt als Hohlwellen ausgebildete Rotorwellen aufweisen.

7. Konditionierer nach mindestens einem der Ansprüche 4 bis 6, **dadurch gekennzeichnet, dass** zumindest Mäntel (13, 14) von Mischer (3) und Verweiler (4) sowie deren Stirnplatten (5, 6) und Produktübergabeöffnungen (7-10) mit Heizmitteln bzw. wärmeisolierenden Mitteln versehen sind.

8. Konditionierer nach Anspruch 4, **dadurch gekennzeichnet, dass** dem Mischer (3) ein Dosierer (2) vorangestellt ist und diese Aggregate so miteinander verbunden sind, dass ein Produktdurchlauf gegeben ist.

9. Konditionierer nach Anspruch 8, **dadurch gekennzeichnet, dass** dem mindestens einem Verweiler (4) eine Presse oder ein Expander nachgeordnet ist.

## Claims

1. Conditioner (1) with at least one assembly (4) for the mixing of products, the assembly (4) having a casing (14) in which a rotatable rotor (16) with working elements (44) is arranged, the working elements (44) being of screw-shaped or paddle-shaped design, and the assembly being a retainer (4) with a rotor (16), and the retainer (4) being provided in the region of a product discharge port (10) with mixing and conveying elements (40), **characterized in that** the mixing and conveying elements are band-shaped guide plates (40) which are arranged between wheel-shaped elements (41, 42) and which are connected via these to the rotor (16) of the retainer (4).

2. Conditioner according to Claim 1, **characterized in that** the mixing and conveying elements (40) are arranged so as to be twisted helically.

3. Conditioner according to Claim 2, **characterized in that** 4 to 16 guide plates (40), preferably 12 guide plates (40), are arranged.

4. Conditioner according to Claim 1, **characterized in that** a mixer (3) precedes the retainer (4), and the mixer (3) and retainer (4) are closed on both end faces by end plates (5, 6).

5. Conditioner according to Claim 4, **characterized in that** the assemblies (3, 4) are connectable, at least at the end plates (5, 6) of one end face, such that a modular arrangement is afforded.

6. Conditioner according to either one of Claims 4 and 5, **characterized in that** the rotors (15, 16) of the mixer (3) and of the retainer (4) consist in each case of at least one segment and have rotor shafts preferably designed as hollow shafts.

7. Conditioner according to at least one of Claims 4 to 6, **characterized in that** at least casings (13, 14) of the mixer (3) and of the retainer (4) and also their end plates (5, 6) and product transfer orifices (7-10) are provided with heating means or heat-insulating means.

8. Conditioner according to Claim 4, **characterized in that** the mixer (3) is preceded by a metering device (2), and these assemblies are connected to one another such that a product passage is afforded.

9. Conditioner according to Claim 8, **characterized in that** the at least one retainer (4) is followed by a press or an expander.

## Revendications

1. Conditionneur (1), comprenant au moins une unité (4) pour mélanger des produits, l'unité (4) présentant une enveloppe (14) dans laquelle un rotor rotatif (16) avec des éléments de travail (44) est disposé, les éléments de travail (44) étant réalisés en forme de vis sans fin ou de pale, et l'unité étant une chambre de séjour (4) avec un rotor (16) et la chambre de séjour (4) étant pourvue, dans la région d'une ouverture d'évacuation de produit (10), d'éléments de mélange et de transport (40), **caractérisé en ce que** les éléments de mélange et de transport sont des tôles conductrices (40) en forme de bande, qui sont disposées entre des éléments en forme de roues (41, 42) et qui sont connectées au rotor (16) de la chambre de séjour (4) par le biais de ceux-ci.

2. Conditionneur selon la revendication 1, **caractérisé en ce que** les éléments de mélange et de transport (40) sont disposés de manière tordue en hélice.

3. Conditionneur selon la revendication 2, **caractérisé en ce que** 4 à 16 tôles conductrices (40), de préférence 12 tôles conductrices (40) sont prévues.

4. Conditionneur selon la revendication 1, **caractérisé en ce qu'**un mélangeur (3) est monté avant la chambre de séjour (4) et le mélangeur (3) et la chambre de séjour (4) sont fermés aux deux côtés frontaux par des plaques frontales (5, 6).

5. Conditionneur selon la revendication 4, **caractérisé en ce que** les unités (3, 4) peuvent être connectées au moins au niveau des plaques frontales (5, 6) d'un côté frontal de telle sorte qu'un agencement modulaire soit obtenu.

6. Conditionneur selon l'une quelconque des revendications 4 ou 5, **caractérisé en ce que** les rotors (15, 16) du mélangeur (3) et de la chambre de séjour (4) se composent d'au moins un segment chacun, et présentent de préférence des arbres de rotor réalisés en tant qu'arbres creux.

7. Conditionneur selon au moins l'une quelconque des revendications 4 à 6, **caractérisé en ce qu'**au moins des enveloppes (13, 14) du mélangeur (3) et de la chambre de séjour (4) ainsi que leurs plaques frontales (5, 6) et des ouvertures de transfert de produit (7-10) sont pourvues de moyens de chauffage ou de moyens thermiquement isolants.

8. Conditionneur selon la revendication 4, **caractérisé en ce qu'**un doseur (2) est placé avant le mélangeur (3) et ces unités sont connectées l'une à l'autre de telle sorte que l'on obtienne une circulation de produit.

9. Conditionneur selon la revendication 8, **caractérisé en ce qu'**une presse ou un dispositif d'expansion sont disposés après l'au moins une chambre de séjour (4).
